# EUROPÄISCHE PATENTSCHRIFT

(11) **EP 4 133 927 B1**
(45) Veröffentlichungstag und Bekanntmachung des Hinweises auf die Patenterteilung: **07.01.2026**
(21) Anmeldenummer: 22168345.1
(22) Anmeldetag: 14.04.2022
(51) Int. Cl.: A01B 71/02, A01B 79/00

(54) **VERFAHREN ZUR OPTIMIERUNG DER EINSTELLUNG VON MASCHINENPARAMETERN EINES LANDWIRTSCHAFTLICHEN GESPANNS**
METHOD FOR OPTIMIZING THE CONFIGURATION OF MACHINE PARAMETERS OF AN AGRICULTURAL VEHICLE COMBINATION
PROCÉDÉ D'OPTIMISATION DU RÉGLAGE DES PARAMÈTRES MACHINE D'UN ATTELAGE AGRICOLE

(30) Priorität: 10.08.2021 DE 102021120765
(43) Veröffentlichungstag der Anmeldung: 15.02.2023
(73) Patentinhaber: CLAAS Tractor S.A.S., 78141 Vélizy-Villacoublay Cedex (FR)
(72) Erfinder: Wieckhorst, Jan Carsten, 29525 Uelzen Orsteil Hanstedt 2 (DE); Birkmann, Christian, 33775 Versmold (DE); Schaub, Christian, 33098 Paderborn (DE); Pieper, Jona, 59394 Nordkirchen (DE)
(74) Vertreter: CLAAS Gruppe

(56) Entgegenhaltungen:
- EP-A1- 3 340 130
- EP-A1- 3 626 041
- US-A1- 2021 068 334

## Beschreibung

Die vorliegende Erfindung betrifft ein Verfahren zur Optimierung der Einstellung von Maschinenparametern eines landwirtschaftlichen Gespanns gemäß dem Oberbegriff von Anspruch 1 sowie eine Cloud-Steueranordnung gemäß Anspruch 12.

Landwirtschaftliche Arbeitsmaschinen wie Traktoren, können mit diversen Anbaugeräten kombiniert werden. Diese Anbaugeräte werden über eine Geräteschnittstelle an die landwirtschaftliche Arbeitsmaschine angebaut. Vorliegend stehen landwirtschaftliche Gespanne mit einem Traktor und einem landwirtschaftlichen Anbaugerät im Vordergrund. Das Anbaugerät wird vorzugsweise von der landwirtschaftlichen Arbeitsmaschine gezogen.

Derartige Anbaugeräte dienen allgemein der Durchführung einer landwirtschaftlichen Arbeitsaufgabe. Im Vordergrund stehen hier Bodenbearbeitungen wie das Pflügen oder Grubbern.

Es sind landwirtschaftliche Gespanne bekannt, die ein Fahrerassistenzsystem aufweisen, dass Einstellungen diverser Maschinenparameter vornimmt und optimiert. Diese Optimierungen erfolgen unter Berücksichtigung vieler unterschiedlicher Einflussfaktoren. Ihnen liegt ein Modell zugrunde, das Abhängigkeiten zwischen Betriebsdaten wie einer Motordrehzahl, einer Fahrgeschwindigkeit, sensorisch erfasster Daten das Feld oder das Gespann betreffend und dergleichen und einzustellenden Maschinenparametern abbildet.

Dieses Modell unterliegt regelmäßigen Anpassungen an die aktuelle Situation. Insbesondere ist das Modell üblicherweise auf einen gewissen Arbeitsbereich der Betriebsdaten ausgelegt und muss bei dessen Verlassen aktualisiert werden. Diese Aktualisierungen bedingen eine hohe Rechenleistung, die von dem Gespann zur Verfügung gestellt werden muss. Aktuelle Modelle werden dabei immer komplexer.

Hinzu kommt, dass die Hardware für die Optimierung des Modells teuer ist, diese mit den Daten einer Vielzahl an Anbaugeräten versorgt und aktuell gehalten werden muss und die Hardware einen Großteil der Zeit nicht ausgelastet ist. Zum einen steht der Traktor oder das Anbaugerät beispielsweise nachts ungenutzt irgendwo und zum anderen machen Aktualisierungsvorgänge des Modells oft nur einen Bruchteil der Zeit während eines Arbeitsprozesses aus. Dennoch muss die Hardware so dimensioniert sein, dass die Anpassung des Modells schnell vorgenommen werden kann.

Solche Verfahren sind aus EP 3 340 130 A1, EP 3 626 041 A1 und US 2021/068334 A1 bekannt.

Der Erfindung liegt das Problem zugrunde, die bekannten Verfahren derart auszugestalten und weiterzubilden, dass hinsichtlich der genannten Probleme eine weitere Optimierung erreicht wird.

Das obige Problem wird durch die Merkmale des kennzeichnenden Teils von Anspruch 1 gelöst.

Wesentlich ist die grundsätzliche Überlegung, die Anpassung des Modells in die Cloud auszulagern.

Im Einzelnen wird vorgeschlagen, dass das Fahrerassistenzsystem bei Verlassen des Primär-Arbeitsbereichs des Modells eine Aktualisierungsroutine anstößt, dass das Fahrerassistenzsystem in der Aktualisierungsroutine zumindest einen Teil der Betriebsdaten an eine Cloud-Steueranordnung versendet, dass die Cloud-Steueranordnung auf Basis der Betriebsdaten ein aktualisiertes oder neu ermitteltes Modell und Aktualisierungsdaten dazu ermittelt, dass die Cloud-Steueranordnung die Aktualisierungsdaten an das Fahrerassistenzsystem versendet und dass das Fahrerassistenzsystem aus dem aktualisierten oder neuen Modell Einstellungen der Maschinenparameter in Abhängigkeit von den Betriebsdaten des Gespanns ermittelt und im Rahmen der Steuerung und/oder Regelung der Maschinenparameter ermittelt und am Gespann einstellt.

Das Modell ist ein Kennfeldmodell. Dieses basiert auf Kennfeldern, die die Abhängigkeiten zwischen den Betriebsdaten und den Einstellungen der Maschinenparameter. Kennfeldmodelle sind besonders geeignet, um vor Ort über Bewegungen auf den Kennfeldern das Gespann zu steuern und/oder zu regeln.

Ein von der Ausgestaltung gemäß Anspruch 2 realisierter Vorteil ist, dass in der Cloud auch gespannferne Optimierungsdaten zur Verfügung stehen, ohne dass diese aufwändig an das Gespann übermittelt und dort abgespeichert und verarbeitet werden müssten. Somit können die Hardware-Anforderungen an das Gespann weiter reduziert werden.

Gemäß Anspruch 3 können von der Cloud-Steueranordnung auch Funktionsdaten des Gespanns berücksichtigt werden. Diese können prinzipiell umfangreiche technische Zusammenhänge der Funktionen des Traktors und des Anbaugerätes umfassen.

Durch die in der Cloud vorhandene Rechenleistung und die Möglichkeit, Funktionsdaten zu vielen Anbaugeräten und Traktoren zu speichern, kann so die Komplexität des Modells und der Berechnung des Modells weiter steigen und die Ergebnisse der Optimierung mittels des Modells können verbessert werden.

Anspruch 4 betrifft die Möglichkeit, dass die Betriebsdaten Messdaten umfassen. Insbesondere eine Arbeitshöhenregelung ist hier interessant.

Bodenbearbeitungsgeräte als bevorzugte Anbaugeräte mit der Möglichkeit der Arbeitstiefenregelung als Spezialfall der Arbeitshöhenregelung sind dann Gegenstand von Anspruch 5.

Anspruch 6 betrifft die bevorzugte Geschwindigkeit der Aktualisierungsroutine. Diese kann insgesamt während des Arbeitsprozesses schnell und vorzugsweise ohne Unterbrechung des Arbeitsprozesses durchgeführt werden.

Anspruch 7 betrifft den Zeitraum zwischen Anstoßen der Aktualisierungsroutine und deren Abschluss. Dafür kann eine Überbrückungsroutine vorgesehen sein, um das landwirtschaftliche Gespann gezielt weiter zu betreiben, bis die Aktualisierungsroutine abgeschlossen ist.

Gemäß Anspruch 8 kann vorgesehen sein, dass das Fahrerassistenzsystem die Aktualisierungsroutine anstößt, bevor das vorliegende Modell nicht mehr oder nicht mehr mit guter Qualität verwendet werden kann, sodass ein nahtloser Übergang zu dem aktualisierten Modell voraussichtlich erreicht wird.

Anspruch 9 betrifft bevorzugte Verteilungen der Hardware des Fahrerassistenzsystems.

Gemäß Anspruch 10 ist eine Verbindung zwischen dem Fahrerassistenzsystem und der Cloud-Steueranordnung vorzugsweise mobilfunkbasiert, wodurch eine schnelle Verbindung erreicht werden kann.

Bei einer Ausgestaltung gemäß Anspruch 11 umfassen die versendeten Betriebsdaten zumindest diejenigen Betriebsdaten, die den Arbeitsbereich verlassen haben. Dadurch hat die Cloud-Steueranordnung eine gute Grundlage für ein neues oder aktualisiertes Modell.

Nach einer weiteren Lehre gemäß Anspruch 12, der eigenständige Bedeutung zukommt, wird eine Cloud-Steueranordnung eingerichtet zur Verwendung in dem vorschlagsgemäßen Verfahren beansprucht.

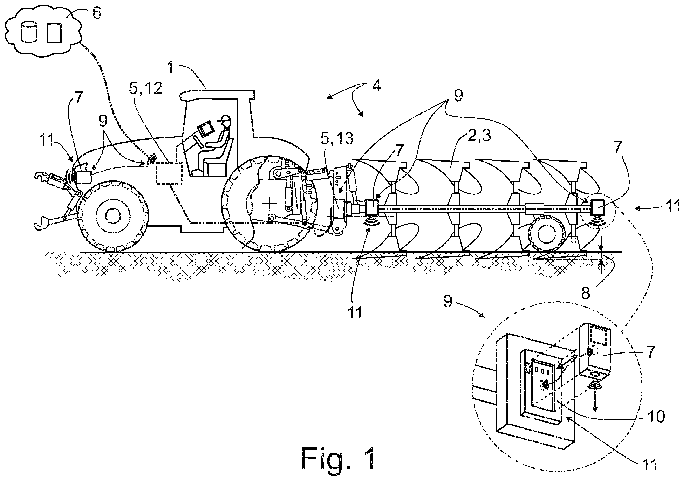

Auf alle Ausführungen zu dem vorschlagsgemäßen Verfahren darf verwiesen werden. Im Folgenden wird die Erfindung anhand einer lediglich ein Ausführungsbeispiel darstellenden Zeichnung näher erläutert. In der Zeichnung zeigt
- Fig. 1: ein landwirtschaftliches Gespann zur Verwendung in dem vorschlagsgemäßen Verfahren.

Vorliegend weist der Traktor 1 einen Heckkraftheber auf, der als Dreipunkt-Kraftheber ausgestaltet ist. Ein an dem Heckkraftheber befestigtes Anbaugerät 2 kann insbesondere ein Bodenbearbeitungsgeräte wie ein Pflug 3 oder ein Grubber oder eine Egge sein. Zusammen bilden der Traktor 1 und das landwirtschaftliche Anbaugerät 2 ein landwirtschaftliches Gespann 4.

Das in den Figuren dargestellte und insoweit bevorzugte Ausführungsbeispiel betrifft ein Verfahren zur Optimierung der Einstellung von Maschinenparametern eines landwirtschaftlichen Gespanns 4, wobei das Gespann 4 einen Traktor 1 und ein landwirtschaftliches Anbaugerät 2 aufweist.

Das Gespann 4 weist außerdem ein Fahrerassistenzsystem 5 auf, das Maschinenparameter des Gespanns 4 während eines Arbeitsprozesses in Echtzeit steuert und/oder regelt.

Bei den Maschinenparametern kann es sich um eine Vielzahl möglicher einstellbarer Parameter des landwirtschaftlichen Gespanns 4 handeln. Das betrifft Parameter einer Motorsteuerung, des Heckkrafthebers, hydraulischer Zylinder, die Fahrgeschwindigkeit usw. Die Maschinenparameter können direkte Einstellungen eines technischen Bauteils wie eine Öffnungsdauer eines Ventils oder abstraktere Parameter wie die Fahrgeschwindigkeit und Motordrückungseinstellungen sein.

Das Fahrerassistenzsystem 5 weist ein Modell zur Steuerung und/oder Regelung der Maschinenparameter des Gespanns 4 auf. wobei das Fahrerassistenzsystem 5 aus dem Modell Einstellungen der Maschinenparameter in Abhängigkeit von Betriebsdaten des Gespanns 4 ermittelt. In einer Durchführungsroutine ermittelt das Fahrerassistenzsystem 5 die Einstellungen der Maschinenparameter im Rahmen der Steuerung und/oder Regelung der Maschinenparameter und stellt diese am Gespann 4 ein.

Das Modell ist dabei hier und vorzugsweise auf einen Arbeitspunkt optimiert. Es ist dabei vorgesehen, dass das Modell einen Primär-Arbeitsbereich der Betriebsdaten aufweist. Dieser Primär-Arbeitsbereich kann beispielsweise eine vorgegebene Drehzahl eines Motors des Traktors 1 und einen vorgegebenen Bereich einer Zugkraft einer Zugkraft-Regelung des Heckkrafthebers umfassen. Vorzugsweise umfasst der Primär-Arbeitsbereich Bereiche vieler solcher Parameter.

Bei Verlassen des Primär-Arbeitsbereichs des Modells durch Betriebsdaten stößt das Fahrerassistenzsystem 5 eine Aktualisierung oder Neuberechnung des Modells an. Dabei kann ein einzelner das Modell verlassender Betriebsparameter ausreichen, es können aber auch mehrere nötig sein.

Unter dem Begriff "Betriebsdaten" sind alle relevanten Vorgänge, Einstellungen, Messdaten und dergleichen des Gespanns 4 und seiner Umgebung zu verstehen. Auch Einstellungen und Messwerte der Maschinenparameter sind Betriebsdaten. Dabei gibt es diejenigen Betriebsdaten, die aktiv eingestellt werden und diejenigen, die sich abhängig einstellen. Vor allem letztere können den Arbeitsbereich verlassen.

Wesentlich ist nun, dass das Fahrerassistenzsystem 5 bei Verlassen des Primär-Arbeitsbereichs des Modells eine Aktualisierungsroutine anstößt, dass das Fahrerassistenzsystem 5 in der Aktualisierungsroutine zumindest einen Teil der Betriebsdaten an eine Cloud-Steueranordnung 6 versendet, dass die Cloud-Steueranordnung 6 auf Basis der Betriebsdaten ein aktualisiertes oder neu ermitteltes Modell und Aktualisierungsdaten dazu ermittelt, dass die Cloud-Steueranordnung 6 die Aktualisierungsdaten an das Fahrerassistenzsystem 5 versendet und dass das Fahrerassistenzsystem 5 aus dem aktualisierten oder neuen Modell Einstellungen der Maschinenparameter in Abhängigkeit von den Betriebsdaten des Gespanns 4 ermittelt und im Rahmen der Steuerung und/oder Regelung der Maschinenparameter ermittelt und am Gespann 4 einstellt.

Hier und vorzugsweise ist dafür in der Cloud-Steueranordnung eine Kopie des Modells hinterlegt, die diese aktualisieren kann. Der Begriff "Cloud" steht stellvertretend für alle passenden Server-Architekturen und ist breit zu verstehen. Es kann sich auch um dedizierte Server handeln.

Die Aktualisierungsdaten können das aktualisierte oder neu ermittelte Modell vollständig umfassen oder eine verkürzte Darstellung davon, aus der sich das aktualisierte oder neu ermittelte Modell ermitteln lässt. Vorzugsweise lässt sich das aktualisierte oder neue Modell aus den Aktualisierungsdaten und dem aktuellen Modell ermitteln. Die Aktualisierungsdaten können also ein Update des aktuellen Modells umfassen. Somit kann das Fahrerassistenzsystem 5 aus den Aktualisierungsdaten das aktualisierte oder neue Modell ermitteln oder entnehmen.

Der Begriff "Modell" ist weit zu verstehen. Hier handelt es sich um ein Kennfeldmodell, grundsätzlich sind jedoch auch einer üblichen Regelung zugrundeliegende Modelle und dergleichen umfasst. Auch die Aktualisierung oder Neuberechnung des Modells ist weit zu verstehen. Wesentlich ist dabei, dass zwischen einer reinen, beliebig ausgestalteten, Anwendung und einer Veränderung des Modells selbst unterschieden werden kann. Die Anwendung selbst ist rechentechnisch dabei hier und vorzugsweise deutlich weniger aufwändig als die Aktualisierung oder Neuberechnung.

Weiter ist hier vorgesehen, dass das Modell ein Kennfeldmodell ist. das Kennfelder aufweist, die die Abhängigkeiten der Einstellungen der Maschinenparameter von den Betriebsdaten abbilden, vorzugsweise, dass in der Aktualisierungsroutine die Kennfelder von der Cloud-Steueranordnung 6 aktualisiert oder neu ermittelt werden.

Kennfelder sind Gleichungen oder Kombinationen aus Gleichungen und/oder Ungleichungen oder anderweitig abgebildeten Abhängigkeiten zwischen Einstellungen von Maschinenparametern, Messdaten, Einflussfaktoren und dergleichen.

Die Kennfelder sind vorzugsweise so ausgestaltet, dass sie hinsichtlich einiger Einflussfaktoren eine relative Konstanz annehmen und dafür bei anderen Einflussfaktoren flexibel sind. Sie umfassen Eingangsparameter und Ausgangsparameter, wobei die Eingangsparameter beispielsweise Messdaten sind und die Ausgangsparameter Einstellungen für Maschinenparameter.

Derartige Kennfelder weisen den Vorteil auf, dass sie für einen konkreten Arbeitspunkt oder Primär-Arbeitsbereich optimiert sind und in diesem Primär-Arbeitsbereich Änderungen von Maschinenparametern mit wenig Rechenleistung abbildbar sind. So können Änderungen von Maschinenparametern als Bewegungen auf den Kennfeldern verstanden werden, die zumeist keine Änderung der Kennfelder selbst erzwingen. Erst wenn sich grundlegende Annahmen oder größere Änderungen ergeben, werden die Kennfelder angepasst, um darauf zu reagieren. Solange sich die Kennfelder selbst nicht ändern, kann daher von einer Steuerung gesprochen werden, die Änderung der Kennfelder entspricht einer Art Regelung.

Es kann auch vorgesehen sein, dass die Cloud-Steueranordnung 6 in der Aktualisierungsroutine das aktualisierte oder neu ermittelte Modell weiterhin auf Basis gespannfernen Optimierungsdaten ermittelt, vorzugsweise, dass die gespannfernen Optimierungsdaten gewählt sind aus der Liste umfassend Wetterdaten, Bodendaten, vorzugsweise Labordaten, insbesondere Nährstoffdaten und/oder Bodenartdaten, Optimierungsziele, Kostendaten, Satellitendaten, Feldbestandsdaten, vorzugsweise Fruchtart, Fruchtfolgen und/oder Biomassedaten, und/oder Planungsdaten des Arbeitsprozesses und/oder anderer Arbeitsprozesse.

Unter dem Begriff "gespannfern" sind solche Daten zu verstehen, die nicht von dem Gespann 4 ermittelt werden.

Die Labordaten können aus Bodenproben stammen. Bodenart können beispielsweise ein Lehmboden oder ein sandiger Boden, etc. sein.

Die Optimierungsziele können von einem Benutzer vorgegeben worden sein oder automatisch ermittelt worden sein. Die Optimierungsziele sind Ziele wie eine Kosteneffizienz, eine maximale Geschwindigkeit der Abarbeitung des Arbeitsprozesses, etc. Die Optimierungsziele sind also insgesamt strategische Vorgaben.

Weiter ist hier und vorzugsweise vorgesehen, dass die Cloud-Steueranordnung 6 in der Aktualisierungsroutine das aktualisierte oder neu ermittelte Modell weiterhin auf Basis von Funktionsdaten des Traktors 1 und/oder des Anbaugerätes 2 ermittelt.

Die Funktionsdaten umfassen technische Abhängigkeiten und Funktionen des Traktors 1 und/oder des Anbaugerätes 2, Daten wie ein Gewicht, eine Motorleistung und dergleichen. Sie geben hier und vorzugsweise umfänglich Auskunft über das Gespann 4 und bilden die technische Basis der Ermittlung des Modells.

Weiterhin ist möglich, dass die Betriebsdaten Messdaten eines Sensors 7 des Gespanns 4 umfassen, vorzugsweise, dass die Messdaten eine Umgebung des Gespanns 4 und/oder Maschinenparameter des Gespanns 4 betreffen, und/oder, dass die Messdaten eine Arbeitshöhe 8 des Anbaugerätes 2 betreffen. Die Messdaten können auch Daten aus einem Antriebsstrang des Traktors 1 betreffen.

Hier und vorzugsweise umfasst mindestens ein Kennfeld die Abhängigkeit der Arbeitshöhe 8 von Maschinenparametern und/oder Feldparametern. So ist die Arbeitshöhe 8 zum Beispiel abhängig von Einstellungen der Geräteschnittstelle. Die Arbeitshöhe 8 selbst beeinflusst wiederum den Kraftstoffverbrauch, eine Arbeitsqualität, etc.

Weiter ist hier und vorzugsweise vorgesehen, dass das Anbaugerät 2 ein Bodenbearbeitungsgerät ist, vorzugsweise, dass das Bodenbearbeitungsgerät ein Pflug 3 oder ein Grubber oder eine Egge ist, weiter vorzugsweise, dass die Messdaten eine Arbeitstiefe des Bodenbearbeitungsgeräts betreffen.

Der Primär-Arbeitsbereich kann einen Bereich der Arbeitstiefe umfassen, der gehalten werden soll. Ist das Halten der Arbeitstiefe nicht mehr möglich, beispielsweise weil eine Regelung des Traktors 1 einen aus dem Modell vorgegebenen Zielbereich nicht halten kann, kann das Modell aktualisiert werden. Die Aktualisierung des Modells kann auch nur eine neue Vorgabe einer Arbeitstiefe sein. Vorzugsweise umfasst die Aktualisierung des Modells allerdings die Veränderung der Abhängigkeiten zwischen Betriebsdaten und Einstellungen der Maschinenparameter, in Form der Kennfelder.

Die Regelung der Arbeitstiefe ist grundsätzlich komplex, da eine Vielzahl von Faktoren und Messdaten aufeinander abgestimmt und berücksichtigt werden müssen. Eine Regelung des Heckkrafthebers wie eine Lageregelung oder Zugkraftregelung muss mit Parametern des Traktors 1 wie einer Reifeneinfederung und einer Neigung des Traktors 1, die die Lage des Heckkrafthebers beeinflussen und Maschinenparametern des Anbaugeräts 2 in Einklang gebracht werden. Die vorschlagsgemäße Cloud-Lösung bietet dafür ausreichend Rechenleistung.

Weiter ist hier und vorzugsweise vorgesehen, dass das landwirtschaftliche Anbaugerät 2 einen Sensor 7 zur Ermittlung einer absoluten Arbeitstiefe aufweist.

Unter dem Begriff "absolut" wird nicht zwingend eine hochgenaue Messung verstanden, sondern allgemeine eine Messung relativ zum Boden. Dabei ist grundsätzlich denkbar, dass die Messung relativ zu einem Bauteil erfolgt, dessen Höhe relativ zum Boden wiederum bekannt ist, vorzugsweise wird die absolute Arbeitstiefe jedoch direkt relativ zum Boden gemessen.

Der Sensor 7 kann Teil einer Sensoranordnung 9 sein. Die Sensoranordnung 9 kann mindestens eine Sensorhalterung 10 aufweisen, wobei der Sensor 7 mittels der mindestens einen Sensorhalterung 10 jeweils an einer Montageposition 11 an unterschiedlichen Anbaugeräten 2 reversibel montiert wird.

Die Montage des Sensors 7 mittels der Sensorhalterung 10 an der Montageposition 11 erfolgt derart, dass die Montage zerstörungsfrei reversibel ist. Insbesondere erfolgt sie auch nicht im Rahmen der Herstellung des Anbaugerätes 2, sondern ist vorzugsweise vor Ort auf dem Feld mit einfachen Hilfsmitteln oder ganz ohne Hilfsmittel möglich.

Der Sensor 7 kann daher mit verschiedenen Anbaugeräten 2 verwendet werden und ist insofern modular. Eine vorteilhafte Anwendung dieser modularen Sensorik betrifft auch die Messung der Arbeitstiefe bei einem Anbaugerät 2, das keine eigene Elektronik aufweist. Wie sich im Folgenden noch ergibt, kann die Sensoranordnung 9 insofern autark von dem Anbaugerät 2 sein. Alternativ kann vorgesehen sein, dass der Sensor 7 nicht mit dem Anbaugerät 2 kommuniziert. Genauso kann jedoch vorgesehen sein, dass der Sensor 7 in eine Elektronik des Anbaugerätes 2 integriert wird oder mit dieser kommuniziert. Auch bei Anbaugeräten 2 mit Elektronik kann jedoch vorgesehen sein, dass der Sensor 7 nicht direkt mit dem Anbaugerät 2 kommuniziert. Bevorzugt ist, dass die Sensoranordnung 9 mit Anbaugeräten 2 mit und ohne Elektronik verwendbar ist. Insgesamt kann sogar vorgesehen sein, dass die Ermittlung der Arbeitstiefe vollständig unabhängig von dem landwirtschaftlichen Anbaugerät 2 ist.

Hier und vorzugsweise ist vorgesehen, dass die Sensorhalterung 10 vom Sensor 7 getrennt an den unterschiedlichen Anbaugeräten 2 montierbar ist. Der Sensor 7 ist dann reversibel an der Sensorhalterung 10 montierbar. Es kann grundsätzlich vorgesehen sein, dass die Sensorhalterung 10 ein relativ günstiges Massenbauteil ist, während der Sensor 7 selbst relativ teuer ist. Das vorschlagsgemäße Verfahren ermöglicht die Wiederverwendung des teuren Sensors 7.

Aus Komfortgründen kann jedoch vorgesehen sein, dass die Sensorhalterung 10 an dem Anbaugerät 2 verbleibt. Dies ermöglicht, die Sensorhalterung 10 stabil und aufwändiger zu montieren, während die Montage des Sensors 7 an der Sensorhalterung 10 selbst vorzugsweise relativ einfach ist. Dies ermöglicht auch die Wiederverwendung derselben Montageposition 11 bei erneutem Anbringen des Sensors 7.

Zur Ermittlung der Arbeitshöhe 8 kann eine Referenzhöhe hinterlegt sein, die die Arbeitshöhe 8 bei einem bekannten Abstand des Sensors 7 zum Boden angibt. Die Arbeitshöhe 8 kann sich dann aus der Differenz dazu ergeben.

In der Kombination wird daher die Regelung einer Arbeitstiefe mittels der Messdaten des Sensors 7 und die Anpassung dieser Regelung über die Aktualisierungsroutine ermöglicht. Besonders interessant dabei ist auch, dass die Arbeitstiefe von vielen Maschinenparametern abhängt. Laufen diese insgesamt aus dem Arbeitsbereich heraus, spricht dies für eine größere Abweichung der aktuellen Situation von dem Arbeitspunkt des Modells. Die Cloud-Steueranordnung 6 ermöglicht die Analyse der Situation und die Anpassung des Modells an die Situation.

Weiterhin ist es hier und vorzugsweise so, dass die Aktualisierungsroutine höchstens 5 min, vorzugsweise höchstens 2 min, weiter vorzugsweise höchstens 30s, dauert.

Somit ist eine Steuerung und/oder Regelung des Gespanns 4 auf Basis des Modells in Echtzeit, also mit einer Verzögerung von wenigen Sekunden oder weniger vorgesehen und die Anpassung des Modells ist ebenfalls relativ schnell möglich.

Weiter ist hier und vorzugsweise vorgesehen, dass das Fahrerassistenzsystem 5 während der Aktualisierungsroutine eine Überbrückungsroutine durchführt, in der das Fahrerassistenzsystem 5 die Maschinenparameter des Gespanns 4 nach einer Überbrückungsvorschrift steuert oder regelt.

Dabei kann vorgesehen sein, dass das Fahrerassistenzsystem 5, insbesondere in Abhängigkeit der Betriebsdaten, in der Überbrückungsroutine auf ein Notfallmodell zurückgreift und/oder Notfalleinstellungen der Maschinenparameter vornimmt und/oder das aktuelle Modell weiter verwendet und/oder in reduziertem Umfang aktualisiert oder neu berechnet.

Das Notfallmodell kann zum Beispiel darauf ausgelegt sein, in einen sicheren Betriebsbereich zu gelangen oder darin zu bleiben, insbesondere ohne dabei noch Optimierungsziele und dergleichen zu berücksichtigen. Es kann auch darauf ausgelegt sein, möglichst wenig Abweichung für den Benutzer erkennen zu lassen. Daher kann auch die Weiternutzung des aktuellen Modells sinnvoll sein.

Auch ein Notstopp oder eine Notverlangsamung des Gespanns 4 kann grundsätzlich beispielsweise bei zu großer Änderung der Betriebsdaten vorgesehen sein.

Außerdem kann vorgesehen sein, dass das Modell einen realen Arbeitsbereich aufweist, der größer als der Primär-Arbeitsbereich ist, sodass die Aktualisierungsroutine voraussichtlich abgeschlossen ist, bevor der reale Arbeitsbereich verlassen wird, vorzugsweise, dass das Fahrerassistenzsystem 5 eine Latenz der Verbindung zur Cloud-Steueranordnung 6 und/oder eine voraussichtliche Rechendauer der Cloud-Steueranordnung 6 berücksichtigt und die Aktualisierungsroutine so anstößt, dass die Aktualisierungsroutine voraussichtlich abgeschlossen ist, bevor der reale Arbeitsbereich verlassen wird.

Weiter ist hier und vorzugsweise vorgesehen, dass das Fahrerassistenzsystem 5 eine Traktor-Einheit 12 und eine Anbaugeräte-Einheit 13 aufweist, vorzugsweise, dass die Hardware des Fahrerassistenzsystem 5 an dem Traktor 1 angeordnet ist und die Anbaugeräte-Einheit 13 nach Bedarf lädt, oder, dass die Hardware Traktor-Einheit 12 an dem Traktor 1 angeordnet ist und die Hardware der Anbaugeräte-Einheit 13 an dem Anbaugerät 2.

Bevorzugt ist es so, dass das Fahrerassistenzsystem 5 über Mobilfunk, insbesondere 4G oder 5G, und/oder Satelliten-basierte Kommunikation mit der Cloud-Steueranordnung 6 kommuniziert.

Zusätzlich ist hier und vorzugsweise vorgesehen, dass die vom Fahrerassistenzsystem 5 an die Cloud-Steueranordnung 6 versendeten Betriebsdaten zumindest die Betriebsdaten umfassen, die den Primär-Arbeitsbereich verlassen haben.

Vorgeschlagen wird außerdem gemäß einer weiteren Lehre, der eigenständige Bedeutung zukommt, eine Cloud-Steueranordnung 6 eingerichtet zur Verwendung in dem vorschlagsgemäßen Verfahren.

Auf alle Ausführungen zu dem vorschlagsgemäßen Verfahren darf verwiesen werden.

### Bezugszeichenliste

- 1: Traktor
- 2: landwirtschaftliches Anbaugerät
- 3: Pflug
- 4: landwirtschaftliches Gespann
- 5: Fahrerassistenzsystem
- 6: Cloud-Steueranordnung
- 7: Sensor
- 8: Arbeitshöhe
- 9: Sensoranordnung
- 10: Sensorhalterung
- 11: Montageposition
- 12: Traktor-Einheit
- 13: Anbaugeräte-Einheit

## Patentansprüche

1. Verfahren zur Optimierung der Einstellung von Maschinenparametern eines landwirtschaftlichen Gespanns (4), wobei das Gespann (4) einen Traktor (1) und ein landwirtschaftliches Anbaugerät (2) aufweist, wobei das Gespann (4) ein Fahrerassistenzsystem (5) aufweist, das Maschinenparameter des Gespanns (4) während eines Arbeitsprozesses in Echtzeit steuert und/oder regelt,
wobei das Fahrerassistenzsystem (5) ein Modell zur Steuerung und/oder Regelung der Maschinenparameter des Gespanns (4) aufweist, wobei das Fahrerassistenzsystem (5) aus dem Modell Einstellungen der Maschinenparameter in Abhängigkeit von Betriebsdaten des Gespanns (4) ermittelt, wobei das Fahrerassistenzsystem (5) in einer Durchführungsroutine die Einstellungen der Maschinenparameter im Rahmen der Steuerung und/oder Regelung der Maschinenparameter ermittelt und am Gespann (4) einstellt,
wobei das Modell einen Primär-Arbeitsbereich der Betriebsdaten aufweist, wobei das Fahrerassistenzsystem (5) bei Verlassen des Primär-Arbeitsbereichs des Modells durch Betriebsdaten eine Aktualisierung oder Neuberechnung des Modells anstößt,
wobei das Fahrerassistenzsystem (5) bei Verlassen des Primär-Arbeitsbereichs des Modells eine Aktualisierungsroutine anstößt, wobei das Fahrerassistenzsystem (5) in der Aktualisierungsroutine zumindest einen Teil der Betriebsdaten an eine Cloud-Steueranordnung (6) versendet, wobei die Cloud-Steueranordnung (6) auf Basis der Betriebsdaten ein aktualisiertes oder neu ermitteltes Modell und Aktualisierungsdaten dazu ermittelt, wobei die Cloud-Steueranordnung (6) die Aktualisierungsdaten an das Fahrerassistenzsystem (5) versendet und wobei das Fahrerassistenzsystem (5) aus dem aktualisierten oder neuen Modell Einstellungen der Maschinenparameter in Abhängigkeit von den Betriebsdaten des Gespanns (4) ermittelt und im Rahmen der Steuerung und/oder Regelung der Maschinenparameter ermittelt und am Gespann (4) einstellt, **dadurch gekennzeichnet dass** das
Modell ein Kennfeldmodell ist, das Kennfelder aufweist, die die Abhängigkeiten der Einstellungen der Maschinenparameter von den Betriebsdaten abbilden, dass in der Aktualisierungsroutine die Kennfelder von der Cloud-Steueranordnung (6) aktualisiert oder neu ermittelt werden.

2. Verfahren nach Anspruch 1, **dadurch gekennzeichnet, dass** die Cloud-Steueranordnung (6) in der Aktualisierungsroutine das aktualisierte oder neu ermittelte Modell weiterhin auf Basis gespannfernen Optimierungsdaten ermittelt, vorzugsweise, dass die gespannfernen Optimierungsdaten gewählt sind aus der Liste umfassend Wetterdaten, Bodendaten, vorzugsweise Labordaten, insbesondere Nährstoffdaten und/oder Bodenartdaten, Optimierungsziele, Kostendaten, Satellitendaten, Feldbestandsdaten, vorzugsweise Fruchtart, Fruchtfolgen und/oder Biomassedaten, und/oder Planungsdaten des Arbeitsprozesses und/oder anderer Arbeitsprozesse.

3. Verfahren nach Anspruch 1 oder 2, **dadurch gekennzeichnet, dass** die Cloud-Steueranordnung (6) in der Aktualisierungsroutine das aktualisierte oder neu ermittelte Modell weiterhin auf Basis von Funktionsdaten des Traktors (1) und/oder des Anbaugerätes (2) ermittelt.

4. Verfahren nach einem der vorhergehenden Ansprüche, **dadurch gekennzeichnet, dass** die Betriebsdaten Messdaten eines Sensors (7) des Gespanns (4) umfassen, vorzugsweise, dass die Messdaten eine Umgebung des Gespanns (4) und/oder Maschinenparameter des Gespanns (4) betreffen, und/oder, dass die Messdaten eine Arbeitshöhe (8) des Anbaugerätes (2) betreffen.

5. Verfahren nach einem der vorhergehenden Ansprüche, **dadurch gekennzeichnet, dass** das Anbaugerät (2) ein Bodenbearbeitungsgerät ist, vorzugsweise, dass das Bodenbearbeitungsgerät ein Pflug (3) oder ein Grubber oder eine Egge ist, weiter vorzugsweise, dass die Messdaten eine Arbeitstiefe des Bodenbearbeitungsgeräts betreffen.

6. Verfahren nach einem der vorhergehenden Ansprüche, **dadurch gekennzeichnet, dass** die Aktualisierungsroutine höchstens 5 min, vorzugsweise höchstens 2 min, weiter vorzugsweise höchstens 30s, dauert.

7. Verfahren nach einem der vorhergehenden Ansprüche, **dadurch gekennzeichnet, dass** das Fahrerassistenzsystem (5) während der Aktualisierungsroutine eine Überbrückungsroutine durchführt, in der das Fahrerassistenzsystem (5) die Maschinenparameter des Gespanns (4) nach einer Überbrückungsvorschrift steuert oder regelt, dass das Fahrerassistenzsystem (5), insbesondere in Abhängigkeit der Betriebsdaten, in der Überbrückungsroutine auf ein Notfallmodell zurückgreift und/oder Notfalleinstellungen der Maschinenparameter vornimmt und/oder das aktuelle Modell weiter verwendet und/oder in reduziertem Umfang aktualisiert oder neu berechnet.

8. Verfahren nach einem der vorhergehenden Ansprüche, **dadurch gekennzeichnet, dass** das Modell einen realen Arbeitsbereich aufweist, der größer als der Primär-Arbeitsbereich ist, sodass die Aktualisierungsroutine voraussichtlich abgeschlossen ist, bevor der reale Arbeitsbereich verlassen wird, vorzugsweise, dass das Fahrerassistenzsystem (5) eine Latenz der Verbindung zur Cloud-Steueranordnung (6) und/oder eine voraussichtliche Rechendauer der Cloud-Steueranordnung (6) berücksichtigt und die Aktualisierungsroutine so anstößt, dass die Aktualisierungsroutine voraussichtlich abgeschlossen ist, bevor der reale Arbeitsbereich verlassen wird.

9. Verfahren nach einem der vorhergehenden Ansprüche, **dadurch gekennzeichnet, dass** das Fahrerassistenzsystem (5) eine Traktor-Einheit (12) und eine Anbaugeräte-Einheit (13) aufweist, vorzugsweise, dass die Hardware des Fahrerassistenzsystem (5) an dem Traktor (1) angeordnet ist und die Anbaugeräte-Einheit (13) nach Bedarf lädt, oder, dass die Hardware Traktor-Einheit (12) an dem Traktor (1) angeordnet ist und die Hardware der Anbaugeräte-Einheit (13) an dem Anbaugerät (2).

10. Verfahren nach einem der vorhergehenden Ansprüche, **dadurch gekennzeichnet, dass** das Fahrerassistenzsystem (5) über Mobilfunk mit der Cloud-Steueranordnung (6) kommuniziert.

11. Verfahren nach einem der vorhergehenden Ansprüche, **dadurch gekennzeichnet, dass** die vom Fahrerassistenzsystem (5) an die Cloud-Steueranordnung (6) versendeten Betriebsdaten zumindest die Betriebsdaten umfassen, die den Primär-Arbeitsbereich verlassen haben.

12. Cloud-Steueranordnung eingerichtet zur Verwendung in dem Verfahren nach einem der vorhergehenden Ansprüche.

## Claims

1. Method for optimizing the setting of machine parameters of an agricultural vehicle combination (4), wherein the vehicle combination (4) comprises a tractor (1) and an agricultural attachment (2), wherein the vehicle combination (4) comprises a driver assistance system (5) which controls and/or regulates machine parameters of the vehicle combination (4) in real time during a working process,
wherein the driver assistance system (5) has a model for controlling and/or regulating the machine parameters of the vehicle combination (4), wherein the driver assistance system (5) determines settings of the machine parameters from the model on the basis of operating data relating to the vehicle combination (4), wherein the driver assistance system (5) determines the settings of the machine parameters when controlling and/or regulating the machine parameters in an implementation routine and sets them on the vehicle combination (4), wherein the model has a primary working area for the operating data, wherein the driver assistance system (5), when operating data leave the primary working area of the model, initiates an update or recalculation of the model,
wherein the driver assistance system (5), when the primary working area of the model is left, initiates an update routine, wherein the driver assistance system (5) in the update routine sends at least a portion of the operating data to a cloud control arrangement (6), wherein the cloud control arrangement (6) determines an updated or newly determined model and update data therefor on the basis of the operating data,
wherein the cloud control arrangement (6) sends the update data to the driver assistance system (5), and wherein the driver assistance system (5) determines settings of the machine parameters from the updated or new model on the basis of the operating data relating to the vehicle combination (4) and when controlling and/or regulating the machine parameters and sets them on the vehicle combination (4), **characterized in that** the model is a characteristic diagram model having characteristic diagrams representing the dependencies of the settings of the machine parameters on the operating data, and **in that** in the update routine the characteristic diagrams are updated or newly determined by the cloud control arrangement (6).

2. Method according to Claim 1, **characterized in that** the cloud control arrangement (6) in the update routine also determines the updated or newly determined model on the basis of optimization data remote from the vehicle combination, preferably **in that** the optimization data remote from the vehicle combination are selected from the list comprising weather data, soil data, preferably laboratory data, in particular nutrient data and/or soil type data, optimization goals, cost data, satellite data, field crop data, preferably crop type, crop rotations and/or biomass data, and/or planning data relating to the working process and/or other working processes.

3. Method according to Claim 1 or 2, **characterized in that** the cloud control arrangement (6) in the update routine also determines the updated or newly determined model on the basis of functional data relating to the tractor (1) and/or the attachment (2).

4. Method according to one of the preceding claims, **characterized in that** the operating data comprise measurement data from a sensor (7) of the vehicle combination (4), preferably **in that** the measurement data relate to an environment of the vehicle combination (4) and/or machine parameters of the vehicle combination (4), and/or **in that** the measurement data relate to a working height (8) of the attachment (2).

5. Method according to one of the preceding claims, **characterized in that** the attachment (2) is a soil cultivation device, preferably **in that** the soil cultivation device is a plough (3) or a cultivator or a harrow, further preferably **in that** the measurement data relate to a working depth of the soil cultivation device.

6. Method according to one of the preceding claims, **characterized in that** the update routine lasts at most 5 minutes, preferably at most 2 minutes, further preferably at most 30 s.

7. Method according to one of the preceding claims, **characterized in that** the driver assistance system (5) performs a bridging routine during the update routine, in which bridging routine the driver assistance system (5) controls or regulates the machine parameters of the vehicle combination (4) according to a bridging rule, **in that** the driver assistance system (5), in particular on the basis of the operating data, resorts to an emergency model in the bridging routine and/or makes emergency settings of the machine parameters and/or continues to use the current model and/or updates or recalculates it to a reduced extent.

8. Method according to one of the preceding claims, **characterized in that** the model has a real working area which is larger than the primary working area, with the result that the update routine is expected to be completed before the real working area is left, preferably **in that** the driver assistance system (5) takes into account a latency of the connection to the cloud control arrangement (6) and/or an expected computing time of the cloud control arrangement (6) and initiates the update routine such that the update routine is expected to be completed before the real working area is left.

9. Method according to one of the preceding claims, **characterized in that** the driver assistance system (5) comprises a tractor unit (12) and an attachment unit (13), preferably **in that** the hardware of the driver assistance system (5) is arranged on the tractor (1) and loads the attachment unit (13) as required, or **in that** the tractor hardware unit (12) is arranged on the tractor (1) and the hardware of the attachment unit (13) is arranged on the attachment (2).

10. Method according to one of the preceding claims, **characterized in that** the driver assistance system (5) communicates with the cloud control arrangement (6) via mobile radio.

11. Method according to one of the preceding claims, **characterized in that** the operating data sent by the driver assistance system (5) to the cloud control arrangement (6) comprise at least the operating data that have left the primary working area.

12. Cloud control arrangement configured for use in the method according to one of the preceding claims.

## Revendications

1. Procédé d'optimisation du réglage de paramètres machine d'un attelage (4) agricole, l'attelage (4) comportant un tracteur (1) et un outil attelé (2) agricole, l'attelage (4) présentant un système d'assistance au conducteur (5) qui commande et/ou règle en temps réel des paramètres machine de l'attelage (4) au cours d'un processus de travail,
le système d'assistance au conducteur (5) comportant un modèle pour la commande et/ou le réglage des paramètres machine de l'attelage (4), le système d'assistance au conducteur (5) déterminant, à partir du modèle, des réglages des paramètres machine en fonction de données de fonctionnement de l'attelage (4), le système d'assistance au conducteur (5) déterminant, dans une routine d'exécution, les réglages des paramètres machine dans le cadre de la commande et/ou du réglage des paramètres machine et les réglant sur l'attelage (4),
le modèle présentant une plage de travail primaire des données de fonctionnement, sachant que, dans le cas où les données de fonctionnement sortent de la plage de travail primaire du modèle, le système d'assistance au conducteur (5) déclenche une mise à jour ou un nouveau calcul du modèle,
sachant qu'en cas de sortie de la plage de travail primaire du modèle, le système d'assistance au conducteur (5) déclenche une routine de mise à jour,
le système d'assistance au conducteur (5) transmettant, dans la routine de mise à jour, au moins une partie des données de fonctionnement à un dispositif de commande en nuage (6),
le dispositif de commande en nuage (6) déterminant, sur la base des données de fonctionnement, un modèle mis à jour ou nouvellement déterminé et des données de mise à jour associées,
le dispositif de commande en nuage (6) transmettant les données de mise à jour au système d'assistance au conducteur (5), et
le système d'assistance au conducteur (5) déterminant, à partir du modèle mis à jour ou du nouveau modèle, des réglages des paramètres machine qui sont fonction des données de fonctionnement de l'attelage (4), et déterminant des paramètres machine dans le cadre de la commande et/ou du réglage, et les réglant sur l'attelage (4), **caractérisé en ce que**
le modèle est un modèle de diagrammes caractéristiques qui présente des diagrammes caractéristiques reproduisant les dépendances des réglages de paramètres machine vis-à-vis des données de fonctionnement, **en ce que** dans la routine de mise à jour, les champs caractéristiques sont mis à jour ou nouvellement déterminés par le dispositif de commande en nuage (6).

2. Procédé selon la revendication 1, **caractérisé en ce que** dans la routine de mise à jour, le dispositif de commande en nuage (6) continue de déterminer le modèle mis à jour ou nouvellement déterminé, sur la base de données d'optimisation externes à l'attelage, de préférence **en ce que** les données d'optimisation externes à l'attelage sont choisies dans la liste comprenant des données météorologiques, des données concernant le sol, de préférence des données de laboratoire, en particulier des données de substances nutritives et/ou des données de type de sol, des objectifs d'optimisation, des données de coût, des données de satellite, des données concernant les cultures en champ, de préférence le type de culture, les rotations de cultures et/ou des données de biomasse et/ou des données de planification du processus de travail et/ou d'autres processus de travail.

3. Procédé selon la revendication 1 ou 2, **caractérisé en ce que** dans la routine de mise à jour, le dispositif de commande en nuage (6) continue de déterminer le modèle mis à jour ou nouvellement déterminé, sur la base de données de fonctionnement du tracteur (1) et/ou de l'outil attelé (2).

4. Procédé selon une des revendications précédentes, **caractérisé en ce que** les données de fonctionnement comportent des données de mesure d'un capteur (7) de l'attelage (4), de préférence **en ce que** les données de mesure concernent un environnement de l'attelage (4) et/ou des paramètres machine de l'attelage (4), et/ou **en ce que** les données de mesure concernent une hauteur de travail (8) de l'outil attelé (2).

5. Procédé selon une des revendications précédentes, **caractérisé en ce que** l'outil attelé (2) est un outil de travail du sol, de préférence **en ce que** l'outil de travail du sol est une charrue (3) ou une herse, et en outre de préférence **en ce que** les données de mesure concernent une profondeur de travail de l'outil de travail du sol.

6. Procédé selon une des revendications précédentes, **caractérisé en ce que** la routine de mise à jour dure au maximum 5 min, de préférence au maximum 2 min, et de manière particulièrement avantageuse au maximum 30 s.

7. Procédé selon une des revendications précédentes, **caractérisé en ce que**, pendant la routine de mise à jour, le système d'assistance au conducteur (5) exécute une routine de transition au cours de laquelle le système d'assistance au conducteur (5) commande ou règle les paramètres machine de l'attelage (4) conformément à une consigne de transition, **en ce que** dans la routine de transition, le système d'assistance au conducteur (5) a recours à un modèle de secours et/ou effectue des réglages de secours de paramètres machine et/ou continue d'utiliser le modèle actuel et/ou le met à jour sous une forme réduite ou le recalcule, notamment en fonction des données de fonctionnement.

8. Procédé selon une des revendications précédentes, **caractérisé en ce que** le modèle présente une plage de travail réelle qui est plus grande que la plage de travail primaire, de sorte que la routine de mise à jour est probablement terminée avant la sortie de la plage de travail réelle, de préférence **en ce que** le système d'assistance au conducteur (5) prend en compte une latence de la liaison avec le dispositif de commande en nuage (6) et/ou une durée de calcul prévisible du dispositif de commande en nuage (6) et déclenche la routine de mise à jour de manière à ce que la routine de mise à jour soit probablement terminée avant la sortie de la plage de travail réelle.

9. Procédé selon une des revendications précédentes, **caractérisé en ce que** le système d'assistance au conducteur (5) présente une unité de tracteur (12) et une unité d'outil attelé (13), de préférence **en ce que** le matériel du système d'assistance au conducteur (5) est installé sur le tracteur (1) et charge l'unité d'outil attelé (13) en fonction des besoins, ou **en ce que** le matériel de l'unité de tracteur (12) est installée sur le tracteur (1) et le matériel de l'unité d'outil attelé (13) sur l'outil attelé (2).

10. Procédé selon une des revendications précédentes, **caractérisé en ce que** le système d'assistance au conducteur (5) communique par radio communication mobile avec le dispositif de commande en nuage (6).

11. Procédé selon une des revendications précédentes, **caractérisé en ce que** les données de fonctionnement envoyées au dispositif de commande en nuage (6) par le système d'assistance au conducteur (5) comprennent au moins les données de fonctionnement qui sont sorties de la plage de travail primaire.

12. Dispositif de commande en nuage, conçu pour une utilisation dans le procédé selon une des revendications précédentes.
